# EUROPÄISCHE PATENTSCHRIFT

(11) **EP 1 477 714 B1**
(45) Veröffentlichungstag und Bekanntmachung des Hinweises auf die Patenterteilung: **01.03.2006**
(21) Anmeldenummer: 04008822.1
(22) Anmeldetag: 14.04.2004
(51) Int. Cl.: F16K 31/04

(54) **Stellantrieb für Ventile**
Actuator for valves
Actionneur pour soupape

(30) Priorität: 17.04.2003 DE 10318567
(43) Veröffentlichungstag der Anmeldung: 17.11.2004
(73) Patentinhaber: Saia-Burgess Dresden GmbH, 01257 Dresden (DE)
(72) Erfinder: Müller, Thomas, 01309 Dresden (DE); Flemming, Dietmar, 01796 Pirna (DE); Kurtz, Andreas, 01768 Hausdorf (DE); Schäfer, Simone, 01259 Dresden (DE); Roschke, Thomas, Dr.-Ing., 01477 Arnsdorf (DE)
(74) Vertreter: Heyner, Klaus

(56) Entgegenhaltungen:
- GB-A- 977 250
- GB-A- 2 225 415
- US-A- 2 092 563
- US-A- 5 865 272

## Beschreibung

Die Erfindung betrifft einen Stellantrieb mit elektrischer Hilfsenergie für Ventile, insbesondere einen Synchronmotor mit Linearantrieb zum sicheren Öffnen, Schließen oder Umschalten von 2-Wege und 3-Wege-Ventilen.

Stellantriebe werden überall dort benötigt, wo eine Last entsprechend einer vorgegebenen Führungsgröße in einer bestimmten Zeit auf einem bestimmten Weg und mit einer bestimmten Genauigkeit positioniert werden muss.

Die in diesen Stellantrieben verwendeten Motoren arbeiten in der Regel nicht im Dauerbetrieb, sondern sind kurzzeitigen Belastungen und häufig auch besonders anspruchsvollen Anforderungen ausgesetzt. Besonders bei Stellantrieben mit Linearantrieb zur Ventilverstellung ist ein hoher Verschleiß des Drosselkörpers und des Ventilsitzes aber auch der Motors zu verzeichnen, da dessen Bremsmoment, welches während des Schließvorgangs eines Ventils benötigt wird, unzureichend ist.

Bekannt aus der DE 100 49 958 A1 ist eine fluidtechnische Anordnung sowie eine zugehörige Ventilanordnung mit einem Aktuator. Hierbei ist der Aktuator mittels der Ventilanordnung über mindestens eine erste und eine zweite Fluidleitung durch Fluidkraft betätigbar ausgebildet. Der Aktuator weist ergänzend eine elektrische Komponente zum Anschluss an ein Steuergerät auf. Es ist vorgesehen, dass die Ventilanordnung und der Aktuator über zwei jeweils über die Fluidleitungen führende elektrische Verbindungen miteinander verbunden sind, über die die Ventilanordnung den Aktuator mit elektrischer Energie versorgt.

In der DE 197 22 632 A1 ist ein Antrieb zur periodischen Beaufschlagung wenigstens eines Ventils offenbart, welches für einen Gaswechsel einer Brennkraftmaschine eingesetzt wird. Es wird beschrieben, dass im Bereich eines axialen Endes des Ventils der Schaft des Ventils einen scheibenartigen Anker aufweist, der von einem mit Spannung beaufschlagten Stator umschlossen ist. Durch das sich im Schaltzustand ausgebildete Magnetfeld wird das Ventil axial bewegt. Es wird ferner ausgeführt, dass unmittelbar vor Erreichen des Totpunktes des Ventils die gewonnen elektrische Energie zwischengespeichert und mit dem nächsten Hub dem Antrieb zugeführt wird.

Dokument GB 977 250 offenbart einen Stellantrieb für Ventile, der einen Synchronmotor 2, eine vom Synchronmotor angetriebene Motorstellstange 1, eine mit dieser Motorstellstange in axialer Wirkverbindung stehende Ventilstellstange 5, eine Schaltung die in Abhängigkeit des Stellweges der Motorstellstange 1 und der Ventilstellstange 5 ein Signal zum Auslösen einer Schalthandlung übertragt und eine beim Motoranlauf zur Kraftübertragung auf die Motorstellstange dienende Kupplung aufweist.

Diese Erfindungen haben gemeinsam, dass sie störanfällig und aufwendig zu fertigen sind und darüber hinaus keine entsprechend große Stellzeitdifferenz zwischen der Stellzeit des Stellantriebes und der Stellzeit des vollständigen Öffnens und Schließens des Ventils aufweisen.

Die Aufgabe der Erfindung ist es, einen Stellantrieb mit elektrischer Hilfsenergie für Ventile, insbesondere einen Synchronmotor mit Linearantrieb zur Ventilverstellung zu realisieren, der kostengünstig ist und mit dem ein gedämpftes, aber nur kurzes Fahren auf den Anschlag realisiert werden kann und dabei ein sicheres Schließen und Öffnen eines Ventils ermöglicht wird.

Die Aufgabe wird durch die Merkmale des Stellantriebs mit einem Linearantrieb gemäß Patentanspruch 1 gelöst. Weitere vorteilhafte Ausgestaltungen sind in der Beschreibung und den Zeichnungen enthalten und Gegenstand der zugehörigen Unteransprüche.

Erfindungsgemäß besteht der Stellantrieb mit elektrischer Hilfsenergie aus einem Synchronmotor und einem Linearantrieb. Der Linearantrieb besteht hierbei aus einer vom Synchronmotor angetriebenen Motorstellstange und einer mit dieser Motorstellstange in axialer Wirkverbindung stehenden Ventilstellstange. Diese beiden Stellstangen weisen an ihrem End- bzw. Anfangsbereich zugehörige Anschläge auf, zwischen denen ein Federelement kraftschlüssig verspannt ist. Beim Erreichen der Endlagenstellung bzw. in Abhängigkeit des Stellweges von Motorstellstange und der mit ihr in axialer Wirkverbindung stehenden Ventilstellstange erfolgt mittels einer Schaltfeder eine Signalübertragung zum Auslösen einer Schalthandlung.

Die Verbindung zwischen Motorstellstange und Ventilstellstange ist als formschlüssige, nicht schaltbare und axial bewegliche Koppelverbindung ausgebildet, wobei diese Koppelverbindung im Zusammenwirken mit dem vorgespannten Federelement den Kraftfluss durch die beiden Stellstangen gewährleistet. Das axiale Bewegungsspiel wird durch ein Ineinandergleiten der Motorstellstange und der Ventilstellstange und die axiale Vorspannung beider Stellstangen durch das Federelement realisiert. In einer bevorzugten Ausgestaltungsvariante sind die axialen Enden der Stellstangen als Gabel-Langloch-Aufhängung ausgebildet. Die Motorstellstange weist dazu eine Bohrung auf, durch die ein Bolzen in das als, im Querschnitt, gabelförmige Hohlwelle ausgebildete Ende der Ventilstellstange geführt wird.

Die beim Motoranlauf zur Kraftübertragung auf die Motorstellstange dienende Kupplung ist zwischen dem Magnet und der Nabe des Synchronmotors angeordnet. Diese Kupplung ist mit segmentartigen ineinander greifenden Klauen spielbehaftet ausgebildet, um beim Anlaufen des Motors eine translatorische Bewegungsrichtungsumkehr der Motorstellstange zu ermöglichen.

Ein besonderer Vorteil dieser Kupplung besteht darin, dass gegenüber dem Stand der Technik kein weiteres Getriebe zur gattungsmäßigen Funktionserfüllung mehr notwendig ist. Ergänzend dazu kann ebenso auf einen Kondensator verzichtet werden, der im Stand der Technik zur Kompensation von unerwünschtem Strompegelanstieg beim Anlaufen oder Blockieren des Synchronmotors eingesetzt wird.

Bei einer ersten bevorzugten Ausführungsform erfolgt die Signalübertragung des Stellweges der Motorstellstange und der Ventilstellstange mittels eines an einem Drehpunkt gelagerten Schalthebels auf eine koaxial zur Motorachse aber innerhalb des Gehäuses angeordnete Schaltfeder.

Hierbei wird ein erster an der Motorstellstange angeordneter Anschlag im Öffnungszustand des Ventils von einem Gabelarm eines Schalthebels umfasst und kontaktiert, während im Schließzustand des Ventils der zweite, an der Ventilstellstange angeordnete Anschlag von diesem Gabelarm des Schalthebels umfasst und kontaktiert wird.

Ein besonderer Vorteil dieser ersten bevorzugten Ausführungsform besteht darin, dass die Endlagenstellung der Motorstellstange und der Ventilstellstange durch eine intelligente Lösung mechanisch erfasst wird. Der Kemgedanke dieser Lösung besteht darin, dass der Anschlag der Motorstellstange mit dem oberen Gabelarmende und der Anschlag der Ventilstellstange mit dem unteren Gabelarmende des Schalthebels in der Weise korrespondieren, dass während eines Lastspiels, also während eines vollständigen Offnungs- bzw. Schließvorgangs des Ventils, das obere Gabelarmende des Schalthebels berührungslos durch eine Aussparung im Anschlag der Motorstellstange geführt ist und das untere Gabelarmende des Schalthebels berührungslos durch die Aussparung im Anschlag der Ventilstellstange geführt ist. Das Signal zur Abschaltung des Motors wird ausgelöst, wenn der Anschlag der Motorstellstange das untere Gabelarmende und der Anschlag der Ventilstellstange das obere Gabelarmende des Schalthebels erreicht. Die beiden Aussparungen der Anschläge und die beiden Gabelarmenden sind jeweils nichtfluchtend zueinander angeordnet.

Der besagte Schalthebel ist drehbar am Gehäuse gelagert und überträgt ein kraft- oder wegkompensierendes Signal auf eine an einer Schaltergruppe angeordnete Schaltfeder, die beim Erreichen der Endlagenstellung des einen Schalthebelendes (Gabelarm) auf dem jeweiligen Anschlag mit dem anderen Schalthebelende einen elektrischen Kontakt schließt und den Motor abschaltet.

Bei einer zweiten bevorzugten Ausführungsform erfolgt die Signalübertragung des Stellweges der Motorstellstange und der Ventilstellstange mittels der an den Anschlägen angeordneten Zungen auf eine axial zur Motorachse innerhalb des Gehäuses angeordneten Schaltfeder. Die Schaltfeder ist dazu im Bereich des Federelements, welches sich im Koppelbereich zwischen der Motorstellstange und der Ventilstange befindet, angeordnet. Die Zungen sind derart ausgebildet, dass bei der Hubbewegung der Stellstangen, also der Motorstellstange und der Ventilstellstange, die Schaltfeder auf einen Schliesskontakt oder auf einen Öffnungskontakt wirkt und damit ein Schaltsignal auslöst. Zur Arretierung des Schaltfeder im Gehäuse sind Halteelemente vorgesehen, die ein vertikales Bewegungsspiel der Schaltfeder sichern. Die Schaltfeder bewegt sich in Wirkungsrichtung der Stellstangen nur zwischen einem unteren Schliesskontakt und einem oberen Öffnungskontakt, wobei Schliesskontakt und Öffnungskontakt wechselseitig angeordnet sind.

Das Problem des unzureichend vorhandenen Bremsmoments des Synchronmotors beim Anschlagen des Drosselkörpers am Ventilsitz wurde gegenüber dem Stand der Technik dahingehend gelöst, dass die Stellzeit des Stellantriebes gegenüber der Stellzeit, die zu einem vollständigen Öffnen und Schließen des Ventils notwendig ist, erfindungsgemäß vergrößert wurde. Diese Stellzeitdifferenz wird durch die in axialer Wirkverbindung miteinander stehenden Stellstangen mit den zwischen ihren Anschlägen vorgespanntem Federelement erzeugt. In Folge dieser Stellzeitdifferenz wird der Synchronmotor verzögert abgeschaltet, was zu einem nahezu verschleißfreien Lastspiel führt.

Die signifikanten Vorteile und Merkmale der Erfindung gegenüber dem Stand der Technik sind im Wesentlichen:
■ anstelle eines konventionellen Getriebes und eines Kondensators wird nur eine spielbehaftete Kupplung benötigt,
■ Motorstellstange und Ventilstellstange stehen durch eine nicht schaltbare, formschlüssige, axial bewegliche Koppelverbindung in axialer Wirkverbindung,
■ Stellzeitdifferenz zwischen der Stellzeit des Stellantriebes und der Stellzeit des vollständigen Öffnens und Schließens des Ventils, respektive Verzögerung der Motorabschaltung, ermöglicht ein sicheres und gedämpftes Öffnen und Schließen des Ventils und damit ein nahezu verschleißfreies Lastspiel und
■ beim Erreichen der Endlagenstellung von Motorstellstange und der mit ihr in axialer Wirkverbindung stehenden Ventilstellstange erfolgt mittels einer Schaltfeder eine Signalübertragung zum Auslösen einer Schalthandlung.

Nachstehend wird die Erfindung beispielhaft anhand der folgenden Zeichnungen näher erläutert.

Dabei zeigen:
- Fig. 1a: Axialschnitt des Synchronmotors,
- Fig. 1b: Radialschnitt des Synchronmotors,
- Fig. 2: Axialschnitt des Stellantriebs bei der ersten bevorzugten Ausführungsform mit Schalthebel und Schaltergruppe,
- Fig. 3: Detaildarstellung des Axialschnitts aus Fig. 2 - Linearantrieb im Bereich der Anschläge,
- Fig. 4: Detaildarstellung des Axialschnitts aus Fig. 2 - Bauteil Schaltergruppe
- Fig. 5a: Axialschnitt des Stellantriebs bei der zweiten bevorzugten Ausführungsform, Schnitt durch das Federelement, geöffnetes Ventil
- Fig. 5b: Axialschnitt des Stellantriebs bei der zweiten bevorzugten Ausführungsform. Schnitt durch die Zungen der Anschläge, geöffnetes Ventil
- Fig. 6a: Axialschnitt des Stellantriebs bei der zweiten bevorzugten Ausführungsform, Schnitt durch das Federelement, geschlossenes Ventil
- Fig. 6b: Axialschnitt des Stellantriebs bei der zweiten bevorzugten Ausführungsform, Schnitt durch die Zungen der Anschläge, geschlossenes Ventil
- Fig. 7: Detaildarstellung des Federelements

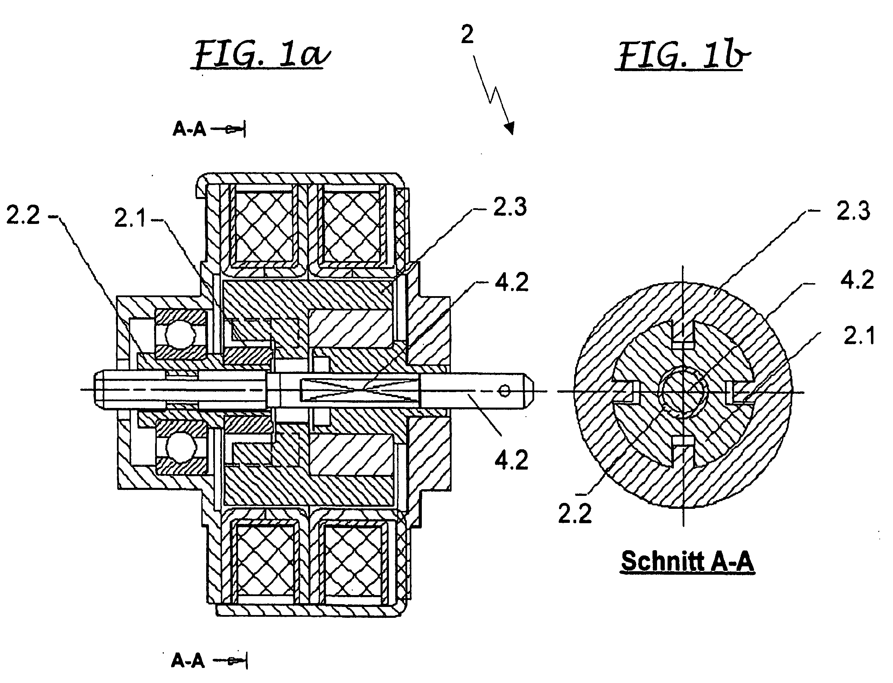

Die Figuren 1a und 1b illustrieren den Axialschnitt und den Radialschnitt des Synchronmotors 2. Im Synchronmotor 2 sind die nicht näher erläuterten Spulenkörper konzentrisch angeordnet und bilden einen Teil des Stators des Synchronmotors 2.
Auf der Motorstellstange 4.2 ist eine Nabe 2.2 aufgebracht, die mit einer erfindungsgemäß angeordneten Klauenkupplung 2.1 form- und kraftschlüssig verbunden ist. Die Klauenkupplung 2.1 weist funktionsbedingt einzelne segmentartige ineinander greifende Klauen auf. Die Klauenkupplung 2.1 wird von einem diese Klauenkupplung 2.1 umfassenden ringförmigen Magneten 2.3 umgeben, der gleichzeitig einen Teil des Rotors des Synchronmotors 2 bildet. Die Verbindung zwischen dem Magneten 2.3 und der Klauenkupplung 2.1 erfolgt durch das Eingreifen von radial ausgebildeten Segmenten des Magneten 2.3 in die der Größe dieser Segmente entsprechende Aussparungen in der Klauenkupplung 2.1. Erfindungsgemäß besteht zwischen den Segmenten des Magneten 2.3 und den Aussparungen in der Klauenkupplung 2.1 ein Spiel, welches zur Realisierung eines Motoranlaufspiels dient. Dieses Spiel dient bei jedem Motoranlauf, also zu Beginn eines jeden Öffnungs- oder Schließvorgangs, zur Sicherstellung einer problemlosen translatorischen Bewegungsrichtungsumkehr der Motorstellstange 4.2.

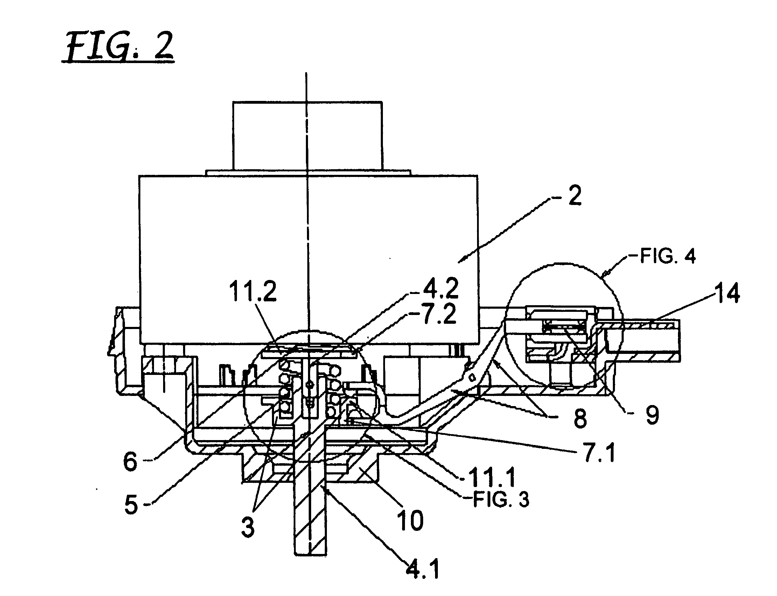

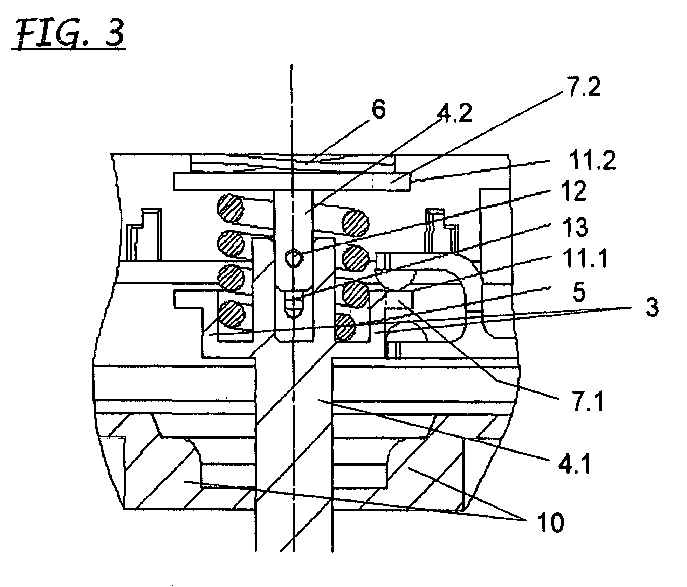

Die Fig. 2 zeigt den Axialschnitt des Stellantriebs im Zusammenwirken mit dem schwenkbaren Schalthebel 8 und der Schaltergruppe 1. Der Stellantrieb umfasst einen Synchronmotor 2 und einen von diesem Synchronmotor 2 angetriebenen Linearantrieb. Der Linearantrieb, der Schalthebel 8 und die Schaltergruppe 1 sind vorzugsweise in einem Gehäuse 10 angeordnet, welches unmittelbar mit dem Synchronmotor 2 lösbar verbunden ist. Die translatorische Bewegung des Linearantriebs wird durch eine Motorstellstange 4.2 und eine mit dieser Motorstellstange 4.2 in axialer Wirkverbindung stehenden Ventilstellstange 4.1 realisiert. Das axiale Ende der Motorstellstange 4.2 weist eine radiale Bohrung auf, währenddessen das axiale Ende der Ventilstellstange 4.1 als, im Querschnitt, gabelförmige Hohlwelle mit einem longitudinalen Durchtritt 13 bzw. Langloch ausgebildet ist, s. Fig. 3.
Die formschlüssige, nicht schaltbare aber bewegliche Koppelverbindung zwischen der Motorstellstange 4.2 und der Ventilstellstange 4.1 erfolgt durch ein als Bolzen ausgebildetes Befestigungselement 12, der einerseits durch die Bohrung der Motorstellstange 4.2 und andererseits durch das Langloch der Ventilstellstange 4.1 geführt ist. Im Endbereich der Motorstellstange 4.2 ist ein erster Anschlag 11.2 mit einer ausgebildeten, aber in der Figur 3 nur angedeuteten Aussparung 7.2 angeordnet. Zwischen diesem Anschlag 11.2 und dem Motor 2 ist eine Federscheibe 6 vorgesehen, deren bevorzugte Aufgabe es ist, Toleranzen bei der Hubbewegung in der Endphase des Öffnungsvorgangs des Ventils auszugleichen. Der Anfangsbereich der Ventilstellstange 4.1 weist einen zweiten Anschlag 11.1 mit einer Aussparung 7.1 auf, wobei dieser Anschlag zur stirnseitigen Aufnahme eines Federelements 5 eine Ausformung 3 besitzt. Dieses zwischen den beiden Anschlägen 11 positionierte und vorgespannte Federelement 5 gewährleistet den stetigen spielfreien Kraftfluss durch die Stellstangen 4. Der Abstand zwischen den beiden Anschlägen 11 wird durch dieses Federelement 5 bis auf die Endphase beim Schließvorgang bzw. die Anfangsphase des Öffnungsvorgangs konstant gehalten.

Am Gehäuse 10 ist der schwenkbar gelagerte Schalthebel 8 befestigt, der ein wegkompensierendes Signal in Abhängigkeit des Stellweges der Stellstangen 4 auf die Schaltergruppe 1 überträgt. Das erste gabelförmige Ende dieses Schalthebels 8 umfasst im dargestellten Öffnungszustand des Ventils den Anschlag 11.1, im nichtdargestellten Schließzustand den Anschlag 11.2. Das andere Ende des Schalthebels korrespondiert mit einer Schaltfeder 9, die im Zusammenwirken mit den in einer Schaltergruppe 1 angeordneten Kontakten 14 eine elektrische Schalthandlung gewährleistet.

Die Wirkungsweise des Stellantriebs bei der ersten bevorzugten Ausführungsform ist Folgende:
Zu Beginn des Schließvorgangs eines Ventils wird der Synchronmotor 2 bestromt, infolgedessen sich die Motorstellstange 4.2 und die mit dieser Motorstellstange 4.2 in axialer Wirkverbindung stehende Ventilstellstange 4.1 gemeinsam nach außen (in der Zeichnung nach unten) bewegen. Die als Federelement 5 eingesetze Feder, welche zwischen den Anschlägen 11 verspannt ist, gewährleistet hierbei den stetigen Kraftfluss zwischen den Stellstangen 4. Bis zum Erreichen des Ventilsitzes durch den Drosselkörper wird der Abstand zwischen den Anschlägen 11 durch das vorgespannte Federelement 5 konstant gehalten. Während der Hubbewegung passiert der mit der Aussparung 7.2 ausgeführte Anschlag 11.2 das obere Gabelarmende und der mit der Aussparung 7.1 ausgeführte Anschlag 11.1 das untere Gabelarmende des Schalthebels 8 berührungslos. Mit dem Erreichen des Ventilsitzes durch den Drosselkörper ist das nichtdargestellte Ventil vollständig geschlossen, wobei die Ventilstellstange 4.1 in dieser Schließstellung des Ventils verharrt. Der Synchronmotor läuft weiter und bewegt die Motorstellstange 4.2 kontinuierlich weiter nach außen. Da im Endbereich der Motorstellstange 4.2 und im Anfangsbereich der Ventilstellstange 4.1 beide Stellstangen 4 durch eine Koppelverbindung axial beweglich ausgebildet sind und eine weitere Bewegung der Ventilstellstange 4.1 durch das Aufsitzen des Drosselkörpers im Ventilsitz nicht realisierbar ist, schiebt sich die Motorstellstange 4.2 in das als Hohlwelle ausgebildete Ende der Ventilstellstange 4.1. Das Federelement 5 wird durch die Motorstellstange 4.2 mit Druck beaufschlagt und dabei taucht die Motorstellstange 4.2 unter Nutzung des vorgegebenen Longitudinalspiels der Koppelverbindung in das Langloch der Ventilstellstange 4.1 ein. Gleichzeitig kontaktiert der Anschlag 11.2 das untere Gabelarmende des Schalthebels 8 und regt eine Signalübertragung mittels des schwenkbar gelagerten Schalthebels 8 an. Das andere Ende des Schalthebels 8 löst durch diese Schwenkbewegung eine innerhalb einer Schaltergruppe 1 angeordnete Schaltfeder 9 aus, die den Synchronmotor 2 abschaltet.
Der Öffnungsvorgang des Ventils erfolgt entsprechend in umgekehrter Reihenfolge. Eine gewünschte Bewegungsrichtungsumkehr des Linearantriebs erfolgt durch eine externe Umschaltung, die jedoch nicht näher ausgeführt wird. Nachdem der Synchronmotor 2 bestromt wird, kehrt die Motorstellstange 4.2 ihre translatorische Bewegung durch Einsatz der erfindungsgemäßen spielbehafteten Kupplung 2.1 um und bewegt sich in umgekehrter Richtung. Im ersten Teil des Öffnungsvorgangs wird das Federelement 5 entspannt, bis das durch das Langloch vorgegebene Longitudinalspiel der Koppelverbindung zwischen Motorstellstange 4.2 und Ventilstellstange 4.1 vollständig ausgeschöpft ist. Erst jetzt entfernt sich der Drosselkörper von seinem Ventilsitz, und der durchströmbare Ventilquerschnitt wird entsprechend der Einzieh- bzw. Hubbewegung der Ventilstellstange 4.1 kontinuierlich freigegeben. Während dieser Hubbewegung der Stellstangen 4 passiert der mit der Aussparung 7.2 ausgeformte Anschlag 11.2 der Motorstellstange 4.2 das obere Gabelarmende und der mit der Aussparung 7.1 ausgeformte Anschlag 11.1 der Ventilstellstange 4.1 das untere Gabelarmende des Schalthebels 8 berührungslos. Der Öffnungsvorgang des Ventils ist beendet, wenn die Stellstangen 4 soweit eingezogen sind, dass der untere Anschlag 11.1, welcher im Endbereich der Ventilstellstange 4.1 angeordnet ist, das obere Gabelarmende berührt und auf diese Weise ein Signal mittels des schwenkbar gelagerten Schalthebels 8 auf die Schaltfeder 9 überträgt.

Es erschließt sich für den Fachmann, dass die Stellzeit des Stellantriebes erfindungsgemäß größer ist, als die zu einem vollständigen Öffnen und Schließen des Ventils notwendige Stellzeit. Diese Stellzeitdifferenz zwischen der Stellzeit des Stellantriebes und der Stellzeit des vollständigen Öffnens und Schließen des Ventils, respektive Verzögerung bei der Motorabschaltung, ermöglicht folglich ein gedämpftes Öffnen und Schließen des Ventils und damit ein nahezu verschleißfreies Lastspiel.

Die Fig. 3 zeigt die Detaildarstellung des Axialschnitts aus Fig. 2 im Bereich der Anschläge 11 zum Zeitpunkt eines geöffneten Ventils. Die in dieser Detaildarstellung nachfolgend beschriebenen Bauteile befinden sich außerhalb des Synchronmotors 2 aber innerhalb des Gehäuses 10. Der Endbereich der Motorstellstange 4.2 weist einen ersten Anschlag 11.2 und eine zwischen diesem Anschlag 11.2 und dem Synchronmotor 2 angeordnete Federscheibe 6 auf. Der Anschlag 11.2 besitzt eine Aussparung 7.2 (in Fig. 3 gestrichelt angedeutet), die das obere Gabelarmende des Schalthebels 8 während der Hubbewegung berührungslos passiert.
Im Bereich des axialen Endes der Motorstellstange 4.2 ist eine radiale Bohrung ausgebildet, in welche ein Befestigungselement 12 in Form eines Bolzens eingreift, der die Motorstellstange 4.2 und die mit einem longitudinalen Durchtritt 13 ausgebildete Ventilstellstange 4.1 verbindet. Das axiale Bewegungsspiel zwischen Motorstellstange 4.2 und Ventilstellstange 4.1 ist durch die Länge des longitudinalen Durchtritts 13 vorgegeben. Der Endbereich der Ventilstellstange 4.1 ist als, im Querschnitt, gabelförmige Hohlwelle ausgebildet, um ein Ineinandergleiten der besagten Motorstellstange 4.2 in die Ventilstellstange 4.1 zu gewährleisten. Zwischen dem auf der Motorstellstange 4.2 angeordneten ersten Anschlag 11.2 und einem im Endbereich der Ventilstellstange 4.1 angeordneten zweiten Anschlag 11.1 ist ein Federelement 5 kraftschlüssig vorgespannt. Zur Arretierung und Fixierung dieses Federelements 5 besitzt der Anschlag 11.1 eine der Form des Federelements 5 entsprechende u-förmige Ausformung 3. Der Anschlag 11.1 weist ebenso wie der Anschlag 11.2 eine Aussparung 7.1/7.2 auf, wobei beide Aussparungen 7 zueinander nichtfluchtend ausgebildet sind.

Das Federelement 5 ist als Spiralfeder ringförmig um den Koppelbereich, also im Bereich der Gabel-Langloch-Aufhängung, angeordnet. Die Gabelarmenden des Schalthebels 8 umfassen im Öttnungszustand des Ventils den Anschlag 11.1. Das Gehäuse 10 ist funktionsbedingt derart ausgeformt, dass im Schließzustand des Ventils die Unterseite des Anschlags 11.1 mit größtmöglicher Kontaktfläche auf der Gehäuseinnenseite aufsitzt.

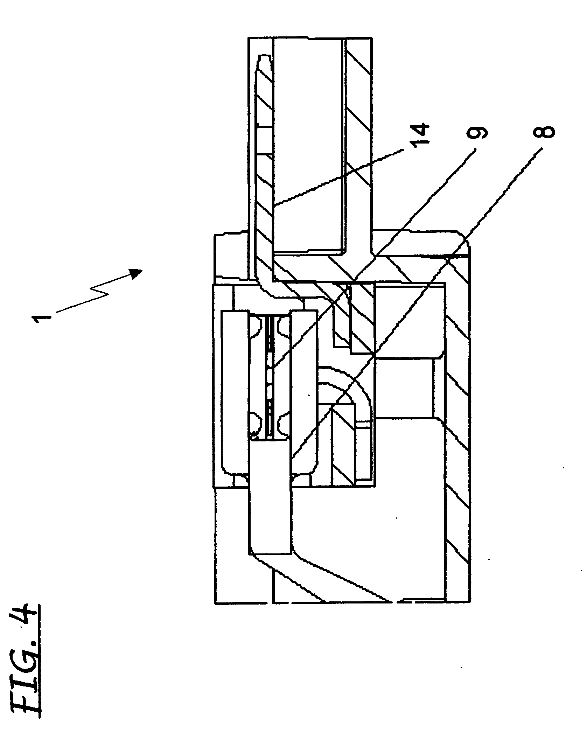

Fig. 4 illustriert eine Detaildarstellung des Axialschnitts aus Fig. 2 im Bereich der Schaltergruppe. Das Ende des Schalthebels 8 greift in eine Schaltergruppe 1 ein, um einen elektrischen Signalfluss zwischen der Schaltfeder 9 und den Kontakten 14 der Schaltergruppe 1 zu gewährleisten. Der elektrische Signalfluss zwischen den Kontakten 14 der Schaltergruppe 1 wird durch die im Endbereich des Schalthebels 8 angeordnete Schaltfeder 9 sichergestellt. Innerhalb eines definierten schmalen Arbeitsbereiches der Schaltergruppe 1 ist der Schalthebel 8 in Bezug auf seinen nichtdargestellten Drehpunkt schwenkbar gelagert. Dieser Arbeitsbereich kann in Abhängigkeit einer gewünschten Dämpfung während des Öffnens und Schließen des Ventils werkseitig variabel ausgeführt werden. Bevorzugt ist die Schaltergruppe 1 aus Fertigungsgründen innerhalb des Gehäuses 10 angeordnet, alternativ auch extern.

Die Materialauswahl der Stellstangen 4, des Schalthebels 8 und des Gehäuses 10 erfolgt vorrangig in Abhängigkeit der auftretenden mechanischen Belastungen und der Möglichkeit einer guten plastischen Verformbarkeit während des Herstellungsprozesses. Als bevorzugte Materialien werden hierfür Leichtmetalle, Keramik, Gussteile, Kunststoffe, insbesondere Carbon, oder auch Verbundmaterialen eingesetzt.

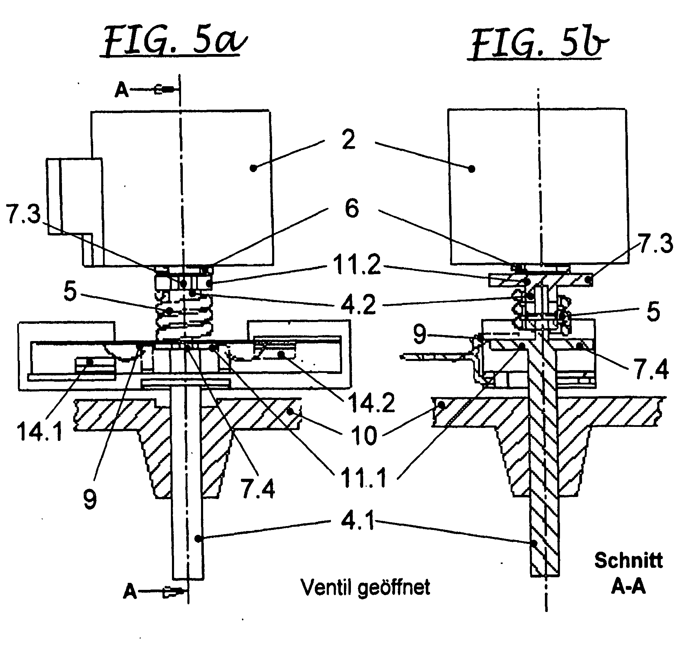

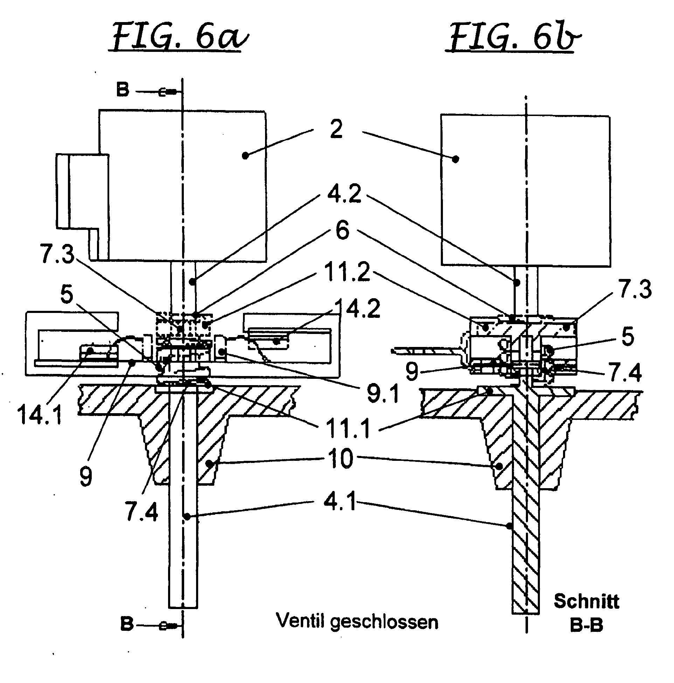

Die Fig. 5a, 5b, 6a und 6b illustrieren die zweite bevorzugte Ausgestaltungsvariante des erfindungsgemäßen Stellantriebs bei vollständig geöffnetem und vollständig geschlossenem Ventil. Die mit dem Index a gekennzeichneten Figuren zeigen dabei den Querschnitt durch die Schaltfeder 9 und die mit dem Index b gekennzeichneten Figuren zeigen den Querschnitt durch die Zungen 7.3, 7.4 der Anschläge 11.1, 11.2.
Die Anordnung des Synchronmotors 2 und des daran angeschlossenen Linearantriebs entsprechen der ersten bevorzugten Ausgestaltungsvariante gemäß Fig. 2. Der wesentliche Unterschied gegenüber Fig. 2 besteht darin, dass die Schaltfeder 9 intern im Bereich des Federelements 5 zwischen den Anschlägen 11.1 und 11.2 angeordnet ist. Die Signalübertragung zur Abschaltung des Synchronmotors 2 erfolgt also nicht über einen Schalthebel 8, der eine extern angeordnete Schaltfeder 9 bedient, sondern vielmehr mittels der an den Anschlägen 11.1, 11.2 angeordneten Zungen 11.3, 11.4. Diese Zungen 11.3, 11.4 sind in Wirkrichtung der Stellstangen 4.1, 4.2 hintereinander angeordnet, wobei der maximale Abstand der Zungen 11.3, 11.4 zueinander durch die Baulänge des entlasteten aber vorgespannten Federelements 5 definiert ist. Die nichtdargestellten Laschen der Schaltfeder 9 sind an Halteelementen 9.1 arretiert, die ein vertikales Bewegungsspiel der Schaltfeder 9 sichern. Die Schaltfeder 9 bewegt sich in Wirkungsrichtung der Stellstangen 4 nur zwischen einem unteren Schliesskontakt 14.1 und einem oberen Öffnungskontakt 14.2 , wobei der Schliesskontakt 14.1 und der Öffnungskontakt 14.2 wechselseitig angeordnet sind.

Die Wirkungsweise des Stellantriebs bei der zweiten bevorzugten Ausführungsform ist Folgende:
Zu Beginn des Schließvorgangs eines Ventils liegen die Zungen 7.3 des Anschlags 11.1 der Ventilstellstange 4.1 an der Unterseite der Schaltfeder 9 und die Schaltfeder 9 am Öffnungskontakt 14.2 an. Der Synchronmotor 2 wird nun bestromt, infolgedessen sich die Motorstellstange 4.2 und die mit dieser Motorstellstange 4.2 in axialer Wirkverbindung stehende Ventilstellstange 4.1 sich gemeinsam nach außen (in der Zeichnung nach unten) bewegen. Die als Federelement 5 eingesetze Feder, welche zwischen den Anschlägen 11 verspannt ist, gewährleistet hierbei den stetigen Kraftfluss zwischen den Stellstangen 4. Bis zum Erreichen des Ventilsitzes durch den Drosselkörper wird der Abstand zwischen den Anschlägen 11 durch das vorgespannte Federelement 5 konstant gehalten. Mit dem Erreichen des Ventilsitzes durch den Drosselkörper ist das nichtdargestellte Ventil vollständig geschlossen, wobei die Ventilstellstange 4.1 in dieser Schließstellung des Ventils verharrt. Der Synchronmmotor 2 läuft weiter und bewegt die Motorstellstange 4.2 kontinuierlich vertikal nach unten. Da im Endbereich der Motorstellstange 4.2 und im Anfangsbereich der Ventilstellstange 4.1 beide Stellstangen 4 durch eine Koppelverbindung axial beweglich ausgebildet sind und eine weitere Vertikalbewegung der Ventilstellstange 4.1 durch das Aufsitzen des Drosselkörpers im Ventilsitz nicht realisierbar ist, schiebt sich die Motorstellstange 4.2 in das als hohlförmige Gabel ausgebildete Ende der Ventilstellstange 4.1. Das Federelement 5 wird solange durch die Motorstellstange 4.2 mit Druck beaufschlagt, bis das durch das Langloch bzw. Durchtritt 13 vorgegebene Longitudinalspiel der Koppelverbindung vollständig ausgeschöpft ist und damit die Motorstellstange 4.2 in oder an der Ventilstellstange 4.1 anschlägt. Während dieser Druckkraftbeaufschlagung kontaktieren die Zungen 7.4 des Anschlags 11.2 die Schaltfeder 9 und bewegen diese in Richtung des zu schließenden Ventils, infolgedessen die Schaltfeder 9 den Schließkontakt 14.1 erreicht. Mit dem Erreichen des Schließkontakts 14.2 wird der Synchronmotor 2 abgeschalten.

Der Öffnungsvorgang des Ventils erfolgt entsprechend in umgekehrter Reihenfolge. Die Zungen 7.4 des Anschlags 11.2 der Motorstellstange 4.2 liegen an der Oberseite der Schaltfeder 9 und die Schaltfeder 9 am Schliesskontakt 14.1 an. Eine gewünschte Bewegungsrichtungsumkehr des Linearantriebs erfolgt durch eine externe Umschaltung, die jedoch nicht näher ausgeführt wird.
Nachdem der Synchronmotor 2 bestromt wird, kehrt die Motorstellstange 4.2 ihre translatorische Bewegung durch Einsatz der erfindungsgemäßen spielbehafteten Kupplung 2.1 um und bewegt sich nach innen (in der Zeichung nach oben). Im ersten Teil des Öffnungsvorgangs wird das Federelement 5 entspannt, bis das durch das Langloch bzw. Durchtritt 13 vorgegebene Longitudinalspiel der Koppelverbindung zwischen Motorstellstange 4.2 und Ventilstellstange 4.1 fast vollständig ausgeschöpft ist, wobei sich die Zungen 7.4 des Anschlags 11.2 der Motorstellstange 4.2 von der Schaltfeder 9 in Richtung des Synchronmotors 2 wegbewegen. Erst jetzt entfernt sich der Drosselkörper von seinem Ventilsitz, und der durchströmbare Ventilquerschnitt wird entsprechend der Hubbewegung der Ventilstellstange 4.1 kontinuierlich freigegeben. Während der vertikalen Hubbewegung der Stellstangen 4 erreichen die Zungen 7.3 des Anschlags 11.1 der Ventilstellstange 4.1 die Unterseite der Schaltfeder 9 und drücken diese bis zum Erreichen des Öffnungskontakts 14.2 in Richtung des Synchronmotors 2. Der Öffnungsvorgang des Ventils ist beendet, wenn die zur Kompensation von Toleranzen eingesetzte Federscheibe 6 der Motorstellstange 4.2 am Synchronmotor anschlägt und/oder die Schaltfeder 9 den Öffnungskontakt erreicht.

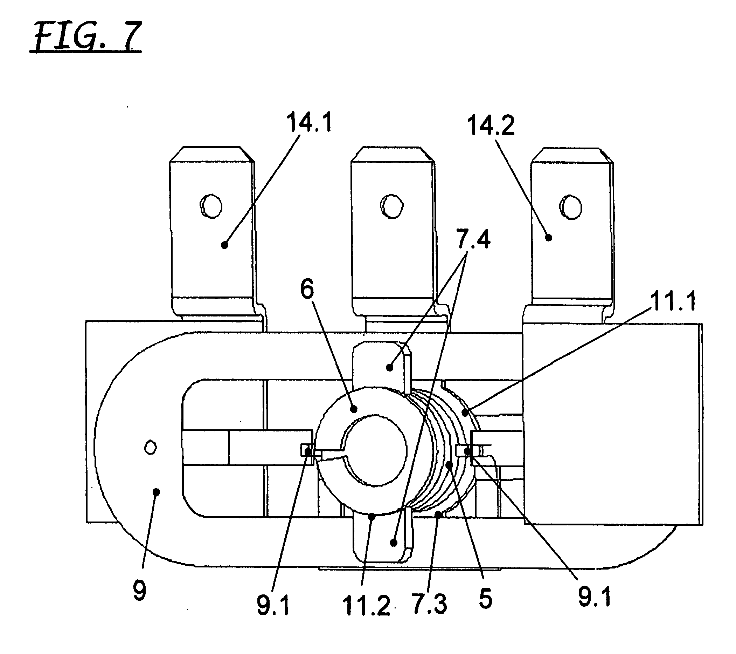

Fig. 7 zeigt die Schaltfeder 9, die im Bereich des Federelements 5 zwischen dem Anschlag 11.2 der nichtdargestellten Motorstellstange 4.2 und dem Anschlag 11.1 der nichtdargestellten Ventilstellstange 4.1 angeordnet ist. Die Schaltfeder 9 ist an den Halteelementen 9.1 derart befestigt, dass die Schaltfeder 9 ein vertikales Bewegungsspiel in Wirkrichtung der Stellstangen 4.1, 4.2 ausüben kann. Die Befestigung der Schaltfeder 9 an den Halteelementen 9.1 erfolgt vorzugsweise an zwei diametral zueinander angeordneten Laschen der Schaltfeder 9. Zwischen dem Anschlag 11.2 und dem nichtdargestellten Synchronmotor 2 ist eine Federscheibe 6 auf der Motorstellstange 4.2 befestigt, deren bevorzugte Aufgabe es ist, Toleranzen bei der Hubbewegung in der Endphase des Öffnungsvorgangs des Ventils auszugleichen. Die Zungen 7.3, 7.4 der Anschläge 11.1, 11.2 sind orthogonal zu der Schaltfeder 9 angeordnet und kontaktieren diese nur in den Schaltzuständen eines vollständig geöffneten oder geschlossenen Ventils. Mit dem Erreichen besagter Schaltzustände liegt entweder die Zunge 7.4 des Anschlags 11.2 oder die Zunge 7.3 des Anschlags 11.1 an der Schaltfeder 9 an. Diese Schaltzustände sind erfindungsgemäß auch dadurch gekennzeichnet, dass die Schaltfeder 9 zum Ende des Schliessvorgangs des Ventils den Schliesskontakt 14.1 erreicht und damit der Synchronmotor 2 abgeschalten wird. Im Gegensatz dazu erreicht die Schaltfeder 9 zum Ende des Öffnungsvorgangs des Ventils den Öffnungskontakt 14.2, infolgedessen auch der Synchronmotor 2 stromlos geschaltet wird. Die zwischen dem Öffnungskontakt 14.2 und dem Schliesskontakt 14.1 dargestellte aber nicht näher bezeichnete Lasche der Schaltfeder 9 dient zur Ausrichtung und Arretierung der Schaltfeder 9 im Gehäuse 10 des Synchronmotors 2.

### LISTE DER BEZUGSZEICHEN

- 1: Schaltergruppe
- 2: Synchrommotor
- 2.1: Kupplung
- 2.2: Nabe
- 2.3: Magnet
- 3: Ausformung
- 4: Stellstangen
- 4.1: Ventilstellstange
- 4.2: Motorstellstange
- 5: Federelement
- 6: Federscheibe
- 7: Aussparungen
- 7.1: Aussparung des Anschlags der Ventilstellstange
- 7.2: Aussparung des Anschlags der Motorstellstange
- 7.3: Zunge des Anschlags der Ventilstellstange
- 7.4: Zunge des Anschlags der Motorstellstange
- 8: Schalthebel
- 9: Schaltfeder
- 9.1: Halteelement
- 10: Gehäuse
- 11: Anschläge
- 11.1: Anschlag der Ventilstellstange
- 11.2: Anschlag der Motorstellstange
- 12: Befestigungselement
- 13: Durchtritt
- 14: Kontakt
- 14.1: Schliesskontakt
- 14.2: Öffnungskontakt

## Patentansprüche

1. Stellantrieb mit elektrischer Hilfsenergie für Ventile, aufweisend einen Synchronmotor (2) mit einem Linearantrieb, mit folgendem Aufbau:
a) eine vom Synchronmotor (2) angetriebene Motorstellstange (4.2),
b) eine beim Motoranlauf zur Kraftübertragung auf die Motorstellstange (4.2) dienende Kupplung (2.1), die zwischen Magnet (2.3) und Nabe (2.2) des Synchronmotors (2) angeordnet ist,
c) einer mit dieser Motorstellstange (4.2) in axialer Wirkverbindung stehende Ventilstellstange (4.1),
d) einem außerhalb des Synchronmotors (2) aber innerhalb des Gehäuses (10) im Endbereich der Motorstellstange (4.2) angeordneten ersten Anschlag (11.2) und einem im Anfangsbereich der Ventilstellstange (4.1) angeordneten zweiten Anschlag (11.1), wobei zwischen diesen Anschlägen (11) ein Federelement (5) kraftschlüssig verspannt ist, und
e) einer Schaltfeder (9), die in Abhängigkeit des Stellweges der Motorstellstange (4.2) und der Ventilstellstange (4.1) ein Signal zum Auslösen einer Schalthandlung überträgt

2. Stellantrieb nach Anspruch 1, **dadurch gekennzeichnet, dass** die Kupplung (2.1) als Klauenkupplung mit segmentartigen ineinander greifenden Klauen spielbehaftet, respektive zur Realisierung eines Anlaufspiels, ausgebildet ist, und bei Motoranlauf die Motorstellstange (4.2) sich von der axialen Endlagenstellung wegbewegt, also ihre vorherige translatorische Bewegungsrichtung umkehrt.

3. Stellantrieb nach einem der Ansprüche 1 oder 2, **dadurch gekennzeichnet, dass** die Verbindung der Motorstellstange (4.2) mit der Ventilstellstange (4.1) als formschlüssige, nicht schaltbare und axial bewegliche Koppelverbindung ausgebildet ist und im Zusammenwirken dieser Koppelverbindung mit dem zwischen den Anschlägen (11.1; 11.2) positionierten vorgespannten Federelement (5) den stetigen Kraftfluss durch die Stellstangen (4) gewährleistet.

4. Stellantrieb nach Anspruch 3, **dadurch gekennzeichnet, dass** die Koppelverbindung derart ausgebildet ist, dass das axiale Bewegungsspiel durch ein Ineinandergleiten der Motorstellstange (4.2) und der Ventilstellstange (4.1) mittels einer Gabel-Langloch-Aufhängung realisiert wird, wobei das Federelement (5) die axiale Vorspannung sichert.

5. Stellantrieb nach einem der Ansprüche 1 bis 4, **dadurch gekennzeichnet, dass** das der Motorstellstange (4.2) zugewandte Ende der Ventilstellstange (4.1) als gabelförmige Hohlwelle ausgebildet ist.

6. Stellantrieb nach einem der Ansprüche 1 bis 5, **dadurch gekennzeichnet, dass** zwischen dem Anschlag (11.2) und dem Synchronmotor (2) eine Federscheibe (6) angeordnet ist.

7. Stellantrieb nach Anspruch 1, **dadurch gekennzeichnet, dass** ein am Gehäuse (10) befestigter, an einem Drehpunkt gelagerter Schalthebel (8), dessen erstes Ende gabelförmig ausgebildet ist, vorgesehen ist, wobei die beiden nichtfluchtenden Gabelarmenden dieser Gabel den Anschlag (11.1) umfassen, und dass das zweite Ende dieses Schalthebels (8) bei Erreichen eines Anschlags mittels der Schaltfeder (9) ein Signal überträgt.

8. Stellantrieb nach Anspruch 7, **dadurch gekennzeichnet, dass** der Schalthebel (8) nach Erreichen eines Anschlages (11.2) eine an einer Schaltergruppe (1) angeordnete Schaltfeder (9) auslöst.

9. Stellantrieb nach einem der Ansprüche 7 oder 8, **dadurch gekennzeichnet, dass** das zur Schaltfeder (9) übertragene Signal ein weg- oder kraftkompensierendes Signal ist.

10. Stellantrieb nach einem der Ansprüche 7 bis 9, **dadurch gekennzeichnet, dass** der Anschlag (11.1) eine der Form des Federelements (5) entsprechende Ausformung (15) zur Aufnahme des Federelements (5) aufweist.

11. Stellantrieb nach einem der Ansprüche 7 bis 10, **dadurch gekennzeichnet, dass** die Anschläge (11) jeweils eine Aussparung aufweisen, die zueinander nichtfluchtend ausgebildet sind, wobei die zueinander nichtfluchtenden Gabelarmenden des Schalthebels derart ausgebildet sind, dass während eines Lastspiels das obere Gabelarmende des Schalthebels (8) berührungslos durch die Aussparung im Anschlag (11.2) geführt ist und das untere Gabelarmende des Schalthebels (8) berührungslos durch die Aussparung im Anschlag (11.1) geführt ist.

12. Stellantrieb nach Anspruch 1, **dadurch gekennzeichnet, dass** die Anschläge (11.1, 11.2) symmetrisch ausgebildete und diametral angeordnete Zungen (7.3, 7.4) aufweisen, die beim Erreichen eines Schaltzustandes abwechselnd die zwischen diesen Anschlägen im Bereich des Federelements angeordnete Schaltfeder (9) kontaktieren, und diese Schaltfeder (9) dabei ein Signal auf einen Schliesskontakt (14.1) oder einen Öffnungskontakt (14.2) überträgt.

13. Stellantrieb nach Anspruch 12, **dadurch gekennzeichnet, dass** die Zungen (7.3, 7.4) der Anschläge (11.1, 11.2) parallel beabstandet und orthogonal zur Schaltfeder (9) angeordnet sind.

14. Stellantrieb nach einem der Ansprüche 12 bis 13, **dadurch gekennzeichnet, dass** mindestens ein Halteelement (9.1) zur Aufnahme der Schaltfeder (9) vorgesehen ist, welches ein vertikales Bewegungsspiel der Schaltfeder (9) sicherstellt.

## Claims

1. Electric power assisted actuator for valves provided with a synchronous motor (2) with a linear drive having the following structure:
a) a motor actuating rod (4.2) driven by the synchronous motor (2),
b) a clutch (2.1) serving to transmit power to the motor actuating rod (4.2) during motor start-up arranged between magnet (2.3) and hub (2.2) of the synchronous motor (2),
c) a valve actuating rod (4.1) being in axial operational connection to said motor actuating rod (4.2),
d) a first stop (11.2) placed outside the synchronous motor (2) but inside the housing (10) in the final region of the motor actuating rod (4.2) and a second stop (11.1) placed in the initial region of the valve actuating rod (4.1), whereby between said stops (11) a spring element (5) is tensioned by force-closure, and
e) a switching spring (9) which dependent upon the actuating displacement of the motor actuating rod (4.2) and the valve actuating rod (4.1) transmits a signal to release a switching action.

2. Actuator to claim 1 **characterized in that** the clutch (2.1) is configured as claw clutch with segment-like claws engaging into each other with backlash for the realization of a start-up backlash, and during motor start-up the motor actuating rod (4.2) moves off from the axial end position, i. e., reverses the direction of its previous linear movement.

3. Actuator to one of the claims 1 or 2 **characterized in that** the connection of the motor actuating rod (4.2) to the valve actuating rod (4.1) is configured as form-closed, non-switchable, axially movable coupler connection and in combined action of said coupler connection with the pretensioned spring element (5) positioned between the stops (11.1; 11.2) ensures continuous flow of power through the actuating rods (4).

4. Actuator to claim 3 **characterized in that** the coupler connection is configured such that the axial motion backlash is realized by that the motor actuating rod (4.2) and the valve actuating rod (4.1) slide into each other thanks to a fork-slotted hole suspension, whereby the spring element (5) ensures the axial pretension.

5. Actuator to one of the claims 1 to 4 **characterized in that** the end of the valve actuating rod (4.1) directed towards the motor actuating rod (4.2) is configured as fork-shaped hollow shaft.

6. Actuator to one of the claims 1 to 5 **characterized in that** a spring washer (6) is disposed between the stop (11.2) and the synchronous motor (2).

7. Actuator to claim 1 **characterized in that** a switch lever (8) attached to the housing (10) and supported at a rotation point, the first end of which is configured fork-shaped, is provided, whereby both not-aligned fork arm ends of said fork include the stop (11.1), and that the second end of said switch lever (8) transmits a signal by means of the switch spring (9) when reaching a stop.

8. Actuator to claim 7 **characterized in that** the switch lever (8) releases a switch spring (9) arranged at a switch group (1) after having reached a stop (11.2).

9. Actuator to one of the claims 7 or 8 **characterized in that** the signal transmitted to the switch spring (9) is a displacement- or force-compensating signal.

10. Actuator to one of the claims 7 to 9 **characterized in that** the stop (11.1) is provided with a recess (3) corresponding to the shape of the spring element (5) to accept the spring element (5).

11. Actuator to one of the claims 7 to 10 **characterized in that** the stops (11) each have a recess configured not aligned to the other, whereby the fork arm ends which are not-aligned to each other are configured such that during a load cycle the upper fork arm end of the switch lever (8) is guided contact-free through the recess in the stop (11.2) and the lower fork arm end of the switch lever (8) is guided contact-free through the recess in the stop (11.1).

12. Actuator to claim 1 **characterized in that** the stops (11.1, 11.2) have cogs (7.3, 7.4) configured symmetric and diametrally arranged, which when reaching a switching state alternately contact the switch spring (9) placed in the region of the spring element between said stops, and **in that** case said switch spring (9) transmits a signal to a closing contact (14.1) or an opening contact (14.2).

13. Actuator to claim 12 **characterized in that** the cogs (7.3, 7.4) of the stops (11.1, 11.2) are arranged parallely distanced and orthogonal to the switch spring (9).

14. Actuator to one of the claims 12 to 13 **characterized in that** for the acception of the switch spring (9) at least one holding element (9.1) is provided which ensures a vertical motion play of the switch spring (9).

## Revendications

1. Actionneur à énergie auxiliaire électrique pour soupapes, présentant un moteur synchrone (2) avec un entraînement linéaire, possédant la structure suivante :
a) une tige de réglage de moteur (4.2) entraînée par le moteur synchrone (2),
b) un accouplement (2.1) servant à la transmission de force à la tige de réglage de moteur (4.2) au démarrage du moteur, lequel est disposé entre l'aimant (2.3) et le moyeu (2.2) du moteur synchrone (2),
c) une tige de réglage de soupape (4.1) en liaison active axiale avec cette tige de réglage de moteur (4.2),
d) une première butée (11.2) disposée à l'extérieur du moteur synchrone (2) mais à l'intérieur du carter (10) dans la partie terminale de la tige de réglage de moteur (4.2) et une deuxième butée (11.1) disposée dans la partie initiale de la tige de réglage de soupape (4.1), un élément à ressort (5) étant contraint par force entre ces butées (11), et
e) un ressort de commutation (9) qui transmet un signal pour le déclenchement d'une action de commutation en fonction de la course de réglage de la tige de réglage de moteur (4.2) et de la tige de réglage de soupape (4.1).

2. Actionneur selon la revendication 1, **caractérisé par le fait que** l'accouplement (2.1) est un accouplement à griffes avec des griffes en forme de segment qui s'engrènent avec du jeu respectivement pour réaliser un jeu de démarrage, et qu'au démarrage du moteur la tige de réglage de moteur (4.2) se déplace en s'éloignant de la position finale axiale, c'est-à-dire inverse son sens de déplacement précédent.

3. Actionneur selon la revendication 1 ou 2, **caractérisé par le fait que** la liaison de la tige de réglage de moteur (4.2) avec la tige de réglage de soupape (4.1) est conçue comme une liaison de couplage à ajustement géométrique, non commutable et mobile axialement, et garantit par la coopération de cette liaison de couplage avec l'élément à ressort (5) précontraint positionné entre les butées (11.1 ; 11.2) le parcours continu de la force à travers les tiges de réglage (4).

4. Actionneur selon la revendication 3, **caractérisé par le fait que** la liaison de couplage est conçue de telle manière que le jeu de déplacement axial est réalisé par un coulissement de la tige de réglage de moteur (4.2) et de la tige de réglage de soupape (4.1) l'une dans l'autre au moyen d'une suspension à fourche et trou oblong, l'élément à ressort (5) assurant la précontrainte axiale.

5. Actionneur selon l'une des revendications 1 à 4, **caractérisé par le fait que** l'extrémité de la tige de réglage de soupape (4.1) tournée vers la tige de réglage de moteur (4.2) est formée comme un arbre creux en fourche.

6. Actionneur selon l'une des revendications 1 à 5, **caractérisé par le fait qu'**une rondelle élastique (6) est disposée entre la butée (11.2) et la moteur synchrone (2).

7. Actionneur selon la revendication 1, **caractérisé par le fait qu'**il est prévu un levier de commutation (8) fixé au carter (10), tournant sur un pivot, dont la première extrémité est en forme de fourche, les deux extrémités des branches de cette fourche, non alignées, entourant la butée (11.1), et que la deuxième extrémité de ce levier de commutation (8) transmet un signal au moyen du ressort de commutation (9) lorsqu'elle atteint une butée.

8. Actionneur selon la revendication 7, **caractérisé par le fait que** le levier de commutation (8) déclenche un ressort de commutation (9) disposé sur un groupe de commutateurs (1) après avoir atteint une butée (11.2).

9. Actionneur selon l'une des revendications 7 ou 8, **caractérisé par le fait que** le signal transmis au ressort de commutation (9) est un signal de compensation de course ou de force.

10. Actionneur selon l'une des revendications 7 à 9, **caractérisé par le fait que** la butée (11.1) présente une forme correspondante à la forme de l'élément à ressort (5) pour loger l'élément à ressort (5).

11. Actionneur selon l'une des revendications 7 à 10, **caractérisé par le fait que** les butées (11) présentent chacune un évidement, lesquels ne sont pas alignés l'un par rapport à l'autre, les extrémités de branches de fourche non alignées du levier de commutation étant formées de telle manière que pendant un cycle de charge l'extrémité de branche de fourche supérieure du levier de commutation (8) est guidée sans contact à travers l'évidement dans la butée (11.2) et l'extrémité de branche de fourche inférieure du levier de commutation (8) est guidée sans contact à travers l'évidement dans la butée (11.1).

12. Actionneur selon la revendication 1, **caractérisé par le fait que** les butées (11.1, 11.2) présentent des languettes (7.3, 7.4) symétriques et disposées diamétralement, qui, à l'atteinte d'un état de commutation, contactent alternativement le ressort de commutation (9) disposé entre ces butées au niveau de l'élément à ressort, et que ce ressort de commutation (9) transmet alors un signal à un contact à fermeture (14.1) ou un contact à ouverture (14.2).

13. Actionneur selon la revendication 12, **caractérisé par le fait que** les languettes (7.3, 7.4) des butées (11.1, 11.2) sont espacées parallèlement et disposées orthogonalement par rapport au ressort de commutation (9).

14. Actionneur selon l'une des revendications 12 à 13, **caractérisé par le fait qu'**il est prévu au moins un élément de retenue (9.1) pour le logement du ressort de commutation (9), lequel assure un jeu de déplacement vertical du ressort de commutation (9).
